# EUROPEAN PATENT APPLICATION

(11) **EP 4 574 491 A1**
(43) Date of publication of application: **25.06.2025**
(21) Application number: 23219261.7
(22) Date of filing: 21.12.2023
(51) Int. Cl.: B60K 1/04, B60L 53/80

(54) **METHOD FOR DOCKING BATTERY MODULES OF AN ENERGY STORING ARRANGEMENT**

(71) Applicant: VOLVO TRUCK CORPORATION, 405 08 Göteborg (SE)
(72) Inventor: ACKEBY, Mattias, 426 79 VÄSTRA FRÖLUNDA (SE); RAGOT, Sebastien, 413 11 GÖTEBORG (SE); HÖRDER, Jonatan, 431 34 MÖLNDAL (SE)
(74) Representative: Kransell & Wennborg KB

(57) **Abstract**

A method for docking of a first and a second battery module of an energy storage arrangement on a respective side of a vehicle chassis, the method comprising;
a) guiding the first and the second battery modules inwardly towards the vehicle chassis,
b) activating a mechanical guiding for guiding the battery modules inwardly towards the vehicle chassis;
- a first rough guiding, wherein a first male connecting element is provided on a connecting side of one of the battery modules and a matching first female connecting element is provided on a connecting side of the other one of the battery modules and wherein the battery modules are guided in the X- and Z-direction to a first relative position;
- a second finer guiding for setting a predetermined X-positions of the battery modules; and
- a third finer guiding for setting a predetermined Z-position of the battery modules.

## Description

### TECHNICAL FIELD

The disclosure relates generally to energy storage arrangements. In particular aspects, the disclosure relates to a method of docking battery modules of an energy storage arrangement. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The propulsion systems of vehicles are continuously developed to meet the demands from the market. A particular aspect relates to the emission of environmentally harmful exhaust gas. Therefore, vehicles propelled by electric traction motors have been increasingly popular, both for cars as well as for trucks and other heavy duty vehicles.

For heavy duty vehicles, the energy storage arrangement, often in the form of traction batteries, need to be relatively large in size to be able to contain a sufficient level of energy such that the vehicle can be operated at an acceptable range using the electric traction motors. The large energy storage arrangements are in turn of substantial weight, and there is a challenged to position and assemble these energy storage systems to the frame of the heavy duty vehicle.

### SUMMARY

According to a first aspect of the disclosure, a method for docking of a first and a second battery module of an energy storage arrangement to a respective side of a chassis is provided, the vehicle chassis extending in a Y-direction, an X-direction and a Z-direction, the method comprising;
a) guiding the first and the second battery modules inwardly towards the vehicle chassis in a Y-direction of the chassis to set the Y-positioning of the battery modules relative the vehicle chassis,
b) activating a mechanical guiding for guiding the battery modules inwardly towards the vehicle chassis in the Y-direction of the chassis to the predetermined end position including;
   - a first rough guiding, wherein a first male connecting element is provided on a connecting side of one of the battery modules and a matching first female connecting element is provided on a connecting side of the other one of the battery modules and wherein the battery modules are guided in the X- and Z-direction to a first relative position by connecting the first male connecting element to the first female connecting element, the first male connecting element and the first female connecting element having a first tolerance, alternatively, the first rough guiding is provided by an optical communication between the first and second battery module wherein the battery modules are aligned and guided in the X- and Z-direction to a first relative position;
   - a second finer guiding for setting a predetermined X-positions of the battery modules, wherein at least one second male connecting element is provided on the connecting side of one of the battery modules and at least one matching second female connecting element is provided on the connecting side of the other one of the battery modules, the second male connecting element and the second female connecting element having a second tolerance and wherein the second tolerance is greater in the Z-direction compared to the X-direction;
   - a third finer guiding for setting a predetermined Z-position of the battery modules, wherein at least one third male connecting element is provided on the connecting side of one of the battery modules and at least one matching third female connecting element is provided on the connecting side of the other battery module, and wherein the third male connecting element(s) and the third female connecting element(s) have a third tolerance and wherein the third tolerance between the third male and female connecting element(s) is greater in the X-direction compared to the Z-direction and wherein the battery modules are guided to the predetermined Z-position by aligning and connecting the third male connecting element(s) and the third female connecting element(s).

The first aspect of the disclosure may seek to at least partly mitigate the problem of difficult and non-precise docking of a first and a second battery module to each other. A technical benefit may include that an energy storage arrangement with at least two battery modules is securely and efficiently connected to each other. By connecting at least two battery modules to each other, the energy storage arrangement can obtain a relatively large maximum state of charge level which in turn may enable for a relatively long range of operation before charging is required.

Furthermore, using a first rough guiding, followed by a second and third finer guiding steps wherein the X- and the Z-directions are adjusted provides an improved and more precise docking of the battery modules which requires less adjustments between the battery modules during the docking operation and thereby simplifies the docking operation and reduces the time of the docking.

Guiding of the first and the second battery modules inwardly towards the vehicle chassis in a Y-direction of the chassis to set the Y-positioning of the battery modules relative the vehicle chassis may be carried out by an operator or be an automated guiding such as by a robot.

Optionally in some examples, including in at least one preferred example, the battery modules comprise a set of second male and a set of second female connecting elements, the sets of second male and female connecting elements being aligned respectively, as seen in the X-direction. A technical benefit may include an improved and more precise positioning of the Z-position of the battery modules.

Optionally in some examples, including in at least one preferred example, the battery modules comprise a set of third male and a set of third female connecting elements, the sets of third male and female connecting elements being aligned respectively, as seen in the X-direction. A technical benefit may include enable alignment around the Y direction and thereby providing an improved and more precise positioning of the Y-position of the battery modules.

Optionally in some examples, including in at least one preferred example, the battery modules each comprises a plurality of battery packs arranged side-by-side, as seen in the X-direction, and wherein at least two third male connecting element are provided on the connecting side of one of the battery modules and at least two matching third female connecting element is provided on the connecting side of the other battery module, and wherein the third connecting elements are provided on non-adj acent battery packs.

Optionally in some examples, including in at least one preferred example, the battery modules each comprises a plurality of battery packs arranged side-by-side, as seen in the X-direction wherein at least every other, optionally each, of the battery packs in the battery modules comprises a third male or female connecting element, and wherein the third male or female connecting elements are aligned with each other, as seen in the X-direction. A technical benefit may include an improved and more precise positioning of the Z-position of the battery modules.

Optionally in some examples, including in at least one preferred example, the method comprises a fourth guiding step to set the position of the first and second battery modules in a correct Y-position, wherein the chassis comprises male or female chassis guiding elements and the first and second battery modules comprises matching female or male guiding elements. A technical benefit may include that the first and second battery modules may be steered into a correct Y-position in relation to the chassis of the vehicle if the initial positioning is not correctly aligned with the chassis.

Optionally in some examples, including in at least one preferred example, the rough guiding is provided by the first male connecting element being connected to an outermost side surface, extending in the Y-direction, of one of the battery modules and the matching first female connecting element being provided on an outermost side surface, extending in the Y-direction, of the other one of the battery modules. A technical benefit may include that the arrangement of the first male and female connecting elements to an outermost surface of the respective battery module does not interfere with the configuration of the battery pack housing at the connecting side. A connection portion of the first male connecting element may be connected to the outermost side of the battery module while the male connecting element, such as a pin portion, projects from the connection side of the battery module. In a corresponding manner, the first female connecting element may comprise a connection portion which is attached to the outermost side of the other one of the battery modules and wherein the first female connecting element is aligned with the connecting side of the battery module.

Optionally in some examples, including in at least one preferred example, the first male and female connecting elements are arranged at a corner portion of the respective connecting sides. A technical benefit may include that the arrangement of the first male and female connecting elements to an outermost surface of the respective battery module does not interfere with the configuration of the battery pack housing at the connecting side.

Optionally in some examples, including in at least one preferred example, the length of the first male connecting elements is greater than the length of the second and third male elements, as measured from the connecting side of the battery module. A technical benefit may include that the first male connecting element connects with the first female connecting element to provide a rough guiding of the first and second battery modules in the X- and Z-directions to arrive at a first relative position, prior to starting the guiding by means of the second and third connecting elements.

Optionally in some examples, including in at least one preferred example, a tip portion of the first male connecting elements has a smaller cross-section than a base portion of the first male connecting element. A technical benefit may include that there is a greater initial tolerance between the first connecting elements which facilitates the initial connection while the precision increases upon when moving the battery modules inwardly in the Y-direction.

Optionally in some examples, including in at least one preferred example, the first male connecting element has a tapered shape. A technical benefit may include that there is a greater initial tolerance between the first connecting elements which facilitates the initial connection while the precision increases upon when moving the battery modules inwardly in the Y-direction.

Optionally in some examples, including in at least one preferred example, the first tolerance is greater than the second tolerance, as measured in the X-direction. A technical benefit may include that the initial contact between first male and female connecting elements, and connection between the battery modules, is facilitated, i.e. a rough guiding, and that the subsequent guiding towards the predetermined X-position by means of the second male and female connecting elements is more precise, i.e a finer guiding.

Optionally in some examples, including in at least one preferred example, the first tolerance is greater than the third tolerance, as measured in the Z-direction. A technical benefit may include that the initial contact between first male and female connecting elements, and connection between the battery modules, is facilitated, i.e. a rough guiding, and that the subsequent guiding towards the predetermined Z-position by means of the third male and female connecting elements is more precise, i.e a finer guiding.

Optionally in some examples, including in at least one preferred example, wherein the second female connecting element(s) comprises an oval or rectangular opening having a greatest extension in the Z-direction. A technical benefit may include that the greater tolerance in the Z-direction facilitates the initial connection of the second connecting elements and guiding in the X-direction to the predetermined X-position of the battery modules.

Optionally in some examples, including in at least one preferred example, the third female connecting element(s) comprises an oval or rectangular opening having a greatest extension in the X-direction. A technical benefit may include that the greater tolerance in the X-direction facilitates the initial connection of the third connecting elements and guiding in the Z-direction to the predetermined Z-position of the battery modules.

Optionally in some examples, including in at least one preferred example, the second and the third finer guiding of the battery modules are carried out simultaneously.

Optionally in some examples, including in at least one preferred example, the each one of the first and the second battery modules comprises a plurality of battery packs arranged side-by-side and wherein the battery packs are mechanically interconnected to adjacent battery pack(s).

Optionally in some examples, including in at least one preferred example, wherein the optical communication uses laser or infra-red light.

Optionally in some examples, including in at least one preferred example, the method is for docking of a first and a second battery module of an energy storage arrangement to a respective side of a vehicle chassis with an Automatic Guided Vehicle (AGV), comprising;
a) providing the first battery module with a master AGV and the second battery module with a slave AGV on a respective side of the vehicle chassis;
b) synchronizing the speed of the master AGV with the speed of the chassis;
c) synchronizing the speed and the X-position, being the position as seen in the X-direction of the chassis, of the slave AGV to the speed of the master AGV;
d) guiding the AGV's inwardly towards the vehicle chassis in a Y-direction of the chassis to set the Y-positioning of the AGV's relative the vehicle chassis,
e) activating the mechanical guiding for guiding the AGV's inwardly towards the vehicle chassis in the Y-direction of the chassis to the predetermined end position.

The mechanical guiding activated in e) being according to the first aspect of the present disclosure.

Guiding of the the AGV's inwardly towards the vehicle chassis in a Y-direction of the chassis to set the Y-positioning of the AGV's relative the vehicle chassis may be carried out by an operator or be an automated guiding.

In the current method of docking a first and a second battery module, two heavy modules are coming from a respective side of a chassis and needs to be assembled with high precision. The battery modules need to meet tolerances both at module level and on a truck assembly line. The AGV has limited accuracy, and to achieve the correct position with sufficient accuracy to be able to join the two sides together, additional guiding is needed to force the respective battery module to meet in the correct position.

In addition, the guiding features also act as separate guiding for different directions, one in X (longitudinal) and one in Z (vertical). The guiding sequence as disclosed herein with different initiation points in Y-direction (docking direction) may therefore improve the guiding significantly.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
Fig. 1 is an exemplary illustration of a vehicle according to an example;
Fig. 2 is an exemplary illustration of an energy storage arrangement according to an example;
Fig. 3 is an exemplary illustration of an energy storage arrangement according to an example;
Figs.4A-4C illustrate a method of docking of the first and the second battery module according to an example;
Figs.5A-5C illustrate an alternative method of docking of the first and the second battery module according to an example; and
Fig. 6 is a flowchart of the method as disclosed herein.

### DETAILED DESCRIPTION

The detailed description set forth below provides information and examples of the disclosed technology with sufficient detail to enable those skilled in the art to practice the disclosure.

The following disclosure aims at minimizing the problem of difficult and non-secure interconnection of a plurality of energy storage modules connected to each other. A technical benefit may include that an energy storage arrangement with at least two battery modules is securely and efficiently connected to each other. A relatively large energy storage arrangement can be provided which may enable for a relatively long range of operation for electric traction motors of the vehicle.

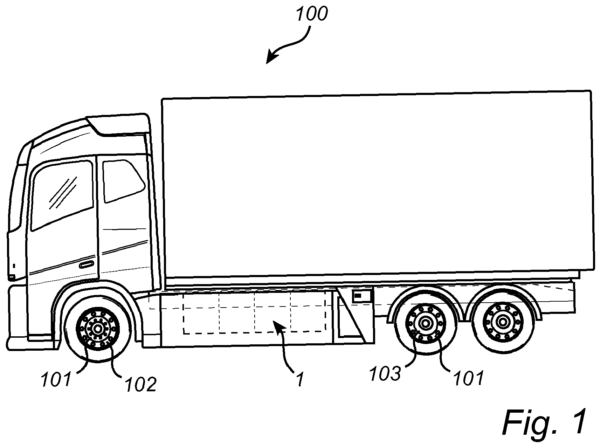

Turning to Fig. 1, which is an exemplary illustration of a vehicle 100 according to an example. The exemplified vehicle 100 is configured to be at least partly propelled by one or more electric traction motors 101. In Fig. 1, the electric traction motors 101 are exemplified as wheel hub motors connected to the pair of front wheels 102 as well as to the foremost pair of rear wheels 103. However, the vehicle 100 may alternatively comprises a single electric traction motor connected to the wheels via a conventional propulsion shaft (not shown). The at least one electric traction motor 101 is configured to apply a propulsive power to the wheels of the vehicle during propulsion, and to generate electric power during braking.

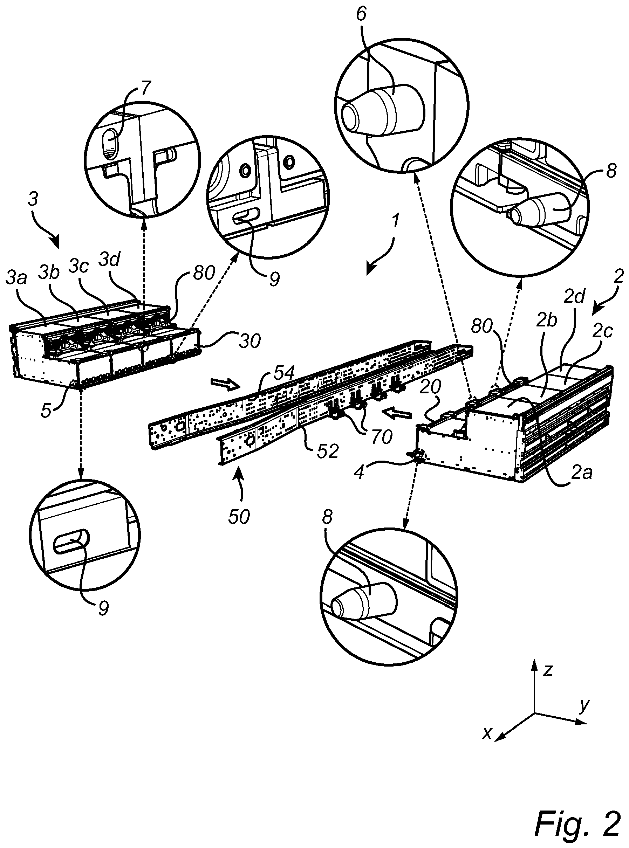

The vehicle 100 further comprises an energy storage arrangement 1, also referred to as a high-voltage vehicle battery. The energy storage arrangement 1 is configured to feed electric power to the electric traction motor 101 during propulsion of the vehicle 100 and to receive electric power during braking. In order to describe the connection of the energy storage arrangement 1 to the frame of the vehicle 100, reference is now made to Fig. 2.

Fig. 2 is a view of the energy storage arrangement 1 comprising a first and a second battery module 2,3 prior to connection to a frame 50 of the vehicle 100 according to an example. In particular, the first battery module 2 is arranged at a first lateral side of the frame 50, and the second energy battery module 3 is arranged at a second lateral side of the frame 50. The exemplified frame 50 comprises a pair of longitudinal frame members 52, 54. Put it differently, the frame 50 comprises a first frame member 52 and a second frame member 54, wherein each of the first 52 and second 54 frame members extends in the X-direction, i.e. the longitudinal direction of the vehicle 100. Thus, in a mounted position the first battery module 2 is connected to the frame 50 on a first lateral side and the second battery module 3 is connected to the frame 50 on a second lateral side.

The first battery module 2 comprises a set of battery packs 2a,2b,2c,2d arranged side-by-side, as seen in the X-direction and the second battery module 3 also comprises a set of battery packs 3a,3b,3c,3d arranged side-by-side, as seen in the X-direction. In this figure there are four battery packs for each battery module, however, with "a set" herein is intended two or more.

The present disclosure relates to a method of docking of the first and the second battery module 2,3 to a respective side of a vehicle chassis, here represented by the frame 50, and connecting the first and the second battery module to each other at a respective connecting side 20,30. The frame 50 extending in a Y-direction, an X-direction and a Z-direction. By Y-direction here is intended both the first 52 and the second 54 frame members as the total chassis. The first and the second battery modules 2,3 comprises a plurality of connecting elements, here exemplified as guiding pins, for improving precision, simplicity and efficiency when connecting the battery modules to each other. By connecting at least two battery modules to each other, the energy storage arrangement can obtain a relatively large maximum state of charge level which in turn may enable for a relatively long range of operation before charging is required.

One of the battery modules, here exemplified by the first battery module 2, comprises a first male connecting element 4 and the other one of the battery modules, here exemplified by the second battery module 3, comprises a matching first female connecting element 5, here exemplified as guiding apertures. The first male and female connecting elements 4,5 are provided on the connecting side 20,30 of the respective battery module 2,3 and are arranged to connect and thereby align and guide the first and second battery modules 2,3 in the X- and Z-direction.

One of the battery modules, here exemplified by the first battery module 2, furthermore comprises a second male connecting element 6 and the other one of the battery modules, here exemplified by the second battery module 3, comprises a matching second female connecting element 7. The second male and female connecting elements 6,7 are provided on the connecting side 20,30 of the respective battery module 2,3 and are arranged to connect and thereby guide the positioning of the first and second battery modules 2,3, as seen in the X-direction.

Additionally, one of the battery modules, here exemplified by the first battery module 2, furthermore comprises two third male connecting elements 8 and the other one of the battery modules, here exemplified by the second battery module 3, comprises two matching third female connecting elements 9. The third male and female connecting elements 8,9 are provided on the connecting side 20,30 of the respective battery module 2,3 and are arranged to connect and thereby guide the positioning of the first and second battery modules 2,3, as seen in the Z-direction.

The two third male connecting elements 8 are provided on non-adj acent battery packs 2a,2b,2c,2d and the two matching female connecting elements 9 are subsequently also provided on non-adjacent and opposing battery packs 3a,3b,3c,3d.

It is noted that in this Fig. 2 each of the male connecting elements 4,6,8 are arranged on the same battery module 2, however, this is not necessary and the first male connecting element may for example be arranged on the same battery module as the second and third female connecting elements, or the second male connecting element may be arranged on the same battery module as the third female connecting element and so on.

The first 2 and second 3 battery modules are connected to the frame 50 by arranging each of the plurality of support brackets 80 in abutment with a corresponding male chassis guiding element 70, here illustrated as vehicle frame support, of the first 52 and second 54 frame members. The male chassis guiding elements 10 are provided for supporting correct positioning of the first and second battery modules 2,3 as seen in the Y-direction, if needed . This is however an optional feature to the present disclosure.

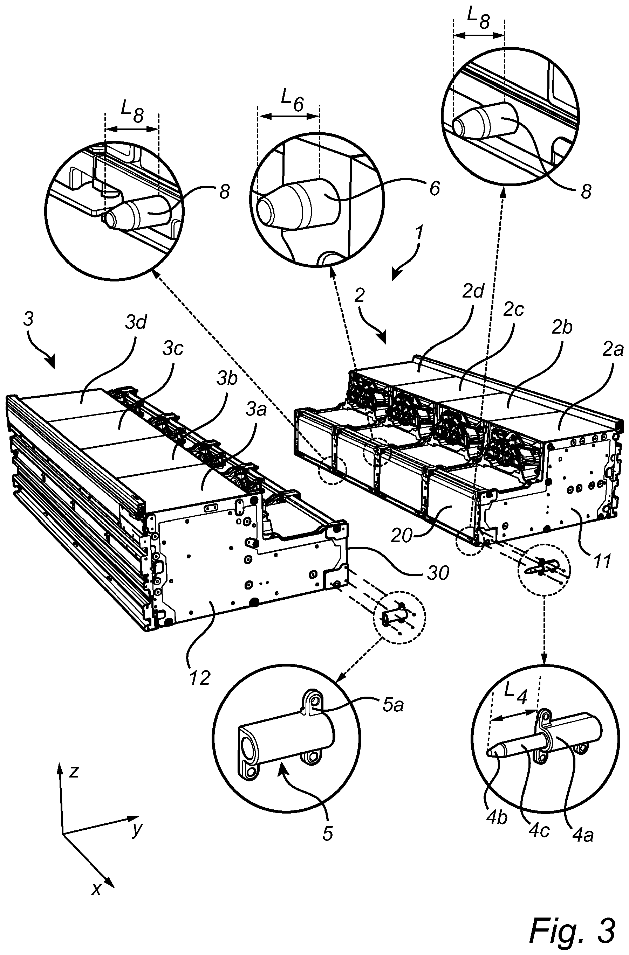

Fig. 3 is a further illustration of the first and the second battery modules 2,3. The first battery module 2 comprises the set of battery packs 2a,2b,2c,2d arranged side-by-side, as seen in the X-direction and the second battery module 3 also comprises the set of battery packs 3a,3b,3c,3d arranged side-by-side, as seen in the X-direction. The respective set of battery packs 2a,2b,2c,2d and 3a,3b,3c,3d are each mechanically interconnected.

As shown in Figs. 2 and 3, the first male connecting element 4 may be connected to the outermost side 11 by means of a connecting portion 4a of the first battery module 2 while the male connecting element 4 projects from the connection side 20 of the first battery module 2.

In a corresponding manner, the first female connecting element 5 comprises a connection portion 5a which is attached to the outermost side 12 of the other one of the battery modules and wherein the first female connecting element 5 is aligned with the connecting side 30 of the second battery module 3, enabling connection with the first male connecting element 4.

The first male and female connecting elements 4,5 are furthermore arranged at a corner portion of the respective connecting sides 20,30, here providing an extension of the respective connecting sides 20,30.

Furthermore, to support that an initial rough guiding is provided by the first male and female connecting elements 4,5, a length l₄ of the first male connecting element 4 may be greater than a length l₆ of the second male element(s) 6 and a length l₈ of the third male elements 8, respectively, as measured from the connecting side 20 of the first battery module 20.

As may be seen from Fig. 3, a tip portion 4b of the first male connecting element 4 has a tapered shape, and a smaller cross-section than a base portion 4c of the first male connecting element 4. A technical benefit may include that there is a greater initial tolerance between the first connecting elements 4,5 which facilitates the initial connection while the precision increases when moving the battery modules 2,3 inwardly in the first and second lateral direction Y1 and Y2, the first and second lateral directions being opposing directions and parallel to the Y-direction of the chassis 50.

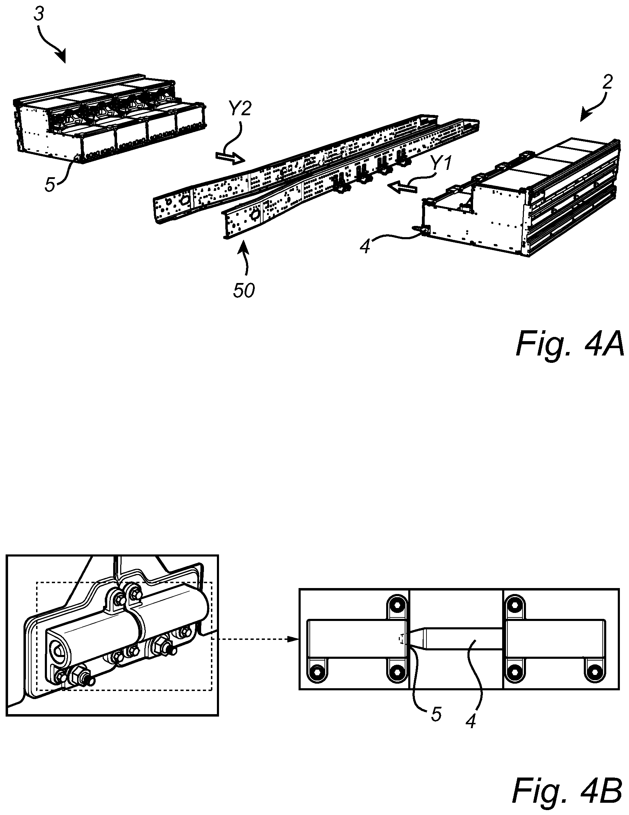

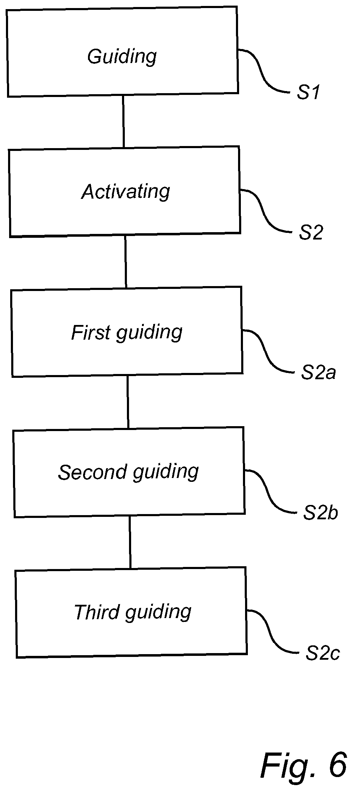

As illustrated in Figs. 4A and 6, the method as disclosed herein, comprises guiding S 1, optionally by means of an operator, the first and the second battery modules 2,3 inwardly towards the vehicle chassis 50, the first battery module 2 being moved laterally in a first direction Y1 towards the frame 50 and the second battery module being moved in a second lateral direction Y2 towards the frame 50 to set the Y-positioning of the battery modules 2,3 relative the vehicle chassis 50.

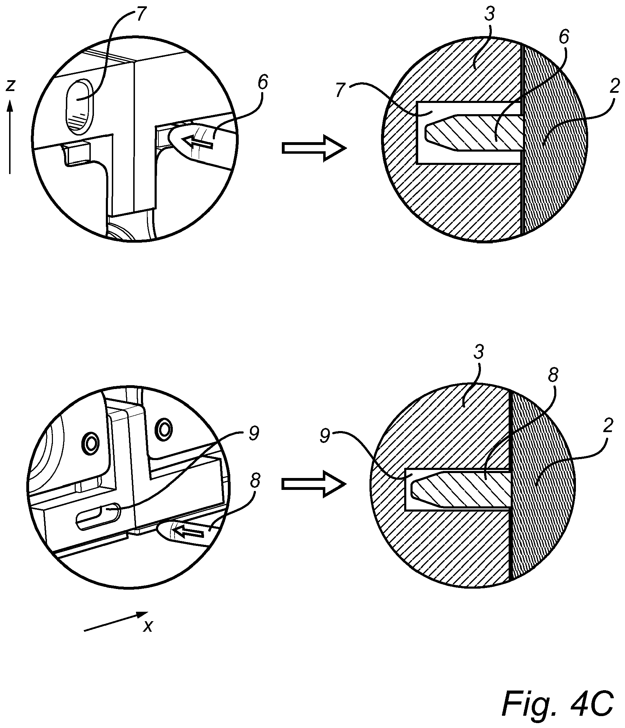

The method as disclosed herein, and illustrated in Figs. 4B, 4C and 6, furthermore comprises activating S2 a mechanical guiding for guiding the battery modules 2,3 inwardly towards the vehicle chassis 50 in the first and second lateral directions Y1,Y2 of the chassis 50 to the predetermined end position.

The mechanical guiding includes a first rough guiding S2a, illustrated in Figs. 4B and 6, including the first male connecting element 4, provided on the connecting side 20 of the first battery module 2 and the matching first female connecting element 5, provided on the connecting side 30 of the second battery module 3, and wherein the battery modules 2,3 are guided in the X- and Z-direction to a first relative position by connecting the first male connecting element 4 to the first female connecting element 5, the first male connecting element and the first female connecting element 4,5 having a first tolerance. Alternatively, and not illustrated in the figures, the first rough guiding is provided by an optical communication between the first and second battery module wherein the battery modules are aligned and guided in the X- and Z-direction to a first relative position.

As illustrated in Figs 4C and 6, the mechanical guiding furthermore includes a second finer guiding S2b for setting a predetermined X-positions of the battery modules 2,3, wherein at least one second male connecting element 6 is provided on the connecting side 20 of the first battery module 2 and at least one matching second female connecting element 7 is provided on the connecting side 30 of the second battery module 3, the second male connecting element 6 and the second female connecting element 7 having a second tolerance and wherein the second tolerance is greater in the Z-direction compared to the X-direction.

As illustrated in Figs 4C and 6, the mechanical guiding furthermore includes a third finer guiding S2c for setting a predetermined Z-position of the battery modules 2,3, wherein at least one third male connecting element 8 is provided on the connecting side 20 of the first battery module 2 and at least one matching third female connecting element 9 is provided on the connecting side 30 of the second battery module 3, and wherein the third male connecting element(s) 8 and the third female connecting element(s) 9 have a third tolerance and wherein the third tolerance between the third male and female connecting element(s) 8, 9 is greater in the X-direction compared to the Z-direction and wherein the battery modules are guided to the predetermined Z-position by aligning and connecting the third male connecting element(s) and the third female connecting element(s).

The second and the third guiding may be carried out simultaneously, which generally means that the lengths of the second male connecting element(s) 6 and the third male connecting element 8 are about the same, i.e. so that contact between the second connecting elements 6,7 and the third connecting elements 8,9, respectively is reached at the same time and thus the guiding and X- and Z-positioning of the battery modules 2,3.

With first, second and third "tolerance" herein is meant the difference in cross-section between the respective male and female connecting elements, preferably as measured at a tip portion of the respective male connecting elements.

The male connecting element as disclosed herein may be a respective guiding pin and the female connecting elements may be a corresponding guiding aperture.

The method may optionally comprise a fourth guiding step (not shown) to set the position of the first and second battery modules 2,3 in a correct Y-position, wherein the chassis comprises male or female chassis guiding elements 10 as illustrated in Fig. 2.

According to an example of the present disclosure the method may include docking of a first and a second battery module 2,3 of an energy storage arrangement 1 to a respective side of a vehicle chassis with Automatic Guided Vehicle (AGV). This is carried out prior to the mechanical guiding illustrated in Figs.4A-4C.

As previously discussed, when docking a first and a second battery module 4,5, two heavy modules are coming from a respective lateral side of a chassis and needs to be assembled with high precision. The first and second battery modules 4,5 need to meet tolerances both at module level and on a truck assembly line. The AGV has limited accuracy, and to achieve the correct position with sufficient accuracy to be able to join the two sides together, additional guiding is needed to force the respective battery module to meet in the correct position.

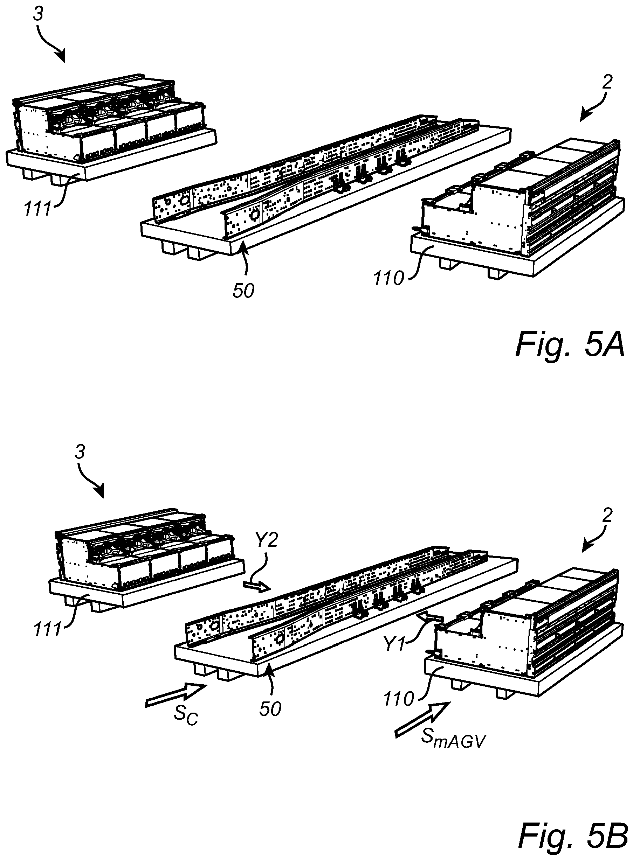

Figs. 5A-5C illustrates the method as disclosed herein and according to an example, wherein the method is for docking of the first and the second battery module 4,5 of the energy storage arrangement 1 to a respective side of a vehicle chassis, here illustrated by means of the frame 50, by means of AGV's 110,111. The method comprising, as shown in Fig. 5A-5B; providing the first battery module 2 with a master AGV 110 and the second battery module 3 with a slave AGV 111 on a respective lateral side of the frame 50.

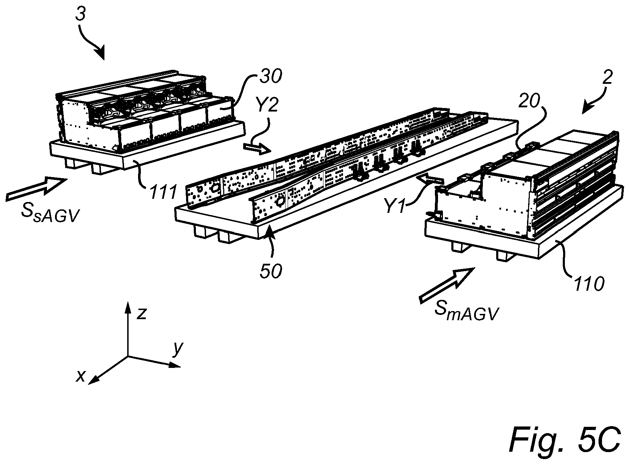

Furthermore, and as illustrated in Fig. 5B, the method includes synchronizing the speed S_{mAGV} of the master AGV with the speed S_{c} of the frame 50, and as illustrated in Fig. 5C to synchronize the speed S_{sAGV} and the X-position, being the position as seen in the X-direction of the chassis, of the slave AGV 111 to the speed S_{mAGV} of the master AGV 110.

After positioning of the first and second battery modules 2,3 by means of the automated vehicle guiding system, an operator performs a relative guiding of the AGV's 110,111 inwardly towards the frame 50 in first and second lateral direction Y1,Y2, being parallel to a Y-direction of the frame 50 to set the Y-positioning of the AGV's 110,111 relative the frame 50.

To set the final relative positions of the first and second battery modules 2,3, including connection of the first and second battery modules 2,3 at their respective connecting sides 20,30, activation of the mechanical guiding for guiding the AGV's inwardly towards the vehicle chassis in the Y-direction of the chassis to the predetermined end position are performed as illustrated in Figs. 4A-4C.

### EXAMPLE LIST

Example 1: A method for docking of a first and a second battery module of an energy storage arrangement to a respective side of a vehicle chassis, the vehicle chassis extending in a Y-direction, an X-direction and a Z-direction, the method comprising;
a) guiding the first and the second battery modules inwardly towards the vehicle chassis in a Y-direction of the chassis to set the Y-positioning of the battery modules relative the vehicle chassis,
b) activating a mechanical guiding for guiding the battery modules inwardly towards the vehicle chassis in the Y-direction of the chassis to the predetermined end position including;
   - a first rough guiding, wherein a first male connecting element is provided on a connecting side of one of the battery modules and a matching first female connecting element is provided on a connecting side of the other one of the battery modules and wherein the battery modules are guided in the X- and Z-direction to a first relative position by connecting the first male connecting element to the first female connecting element, the first male connecting element and the first female connecting element having a first tolerance, alternatively, the first rough guiding is provided by an optical communication between the first and second battery module wherein the battery modules are aligned and guided in the X- and Z-direction to a first relative position;
   - a second finer guiding for setting a predetermined X-positions of the battery modules, wherein at least one second male connecting element is provided on the connecting side of one of the battery modules and at least one matching second female connecting element is provided on the connecting side of the other one of the battery modules, the second male connecting element and the second female connecting element having a second tolerance and wherein the second tolerance is greater in the Z-direction compared to the X-direction;
   - a third finer guiding for setting a predetermined Z-position of the battery modules, wherein at least one third male connecting element is provided on the connecting side of one of the battery modules and at least one matching third female connecting element is provided on the connecting side of the other battery module, and wherein the third male connecting element(s) and the third female connecting element(s) have a third tolerance and wherein the third tolerance between the third male and female connecting element(s) is greater in the X-direction compared to the Z-direction and wherein the battery modules are guided to the predetermined Z-position by aligning and connecting the third male connecting element(s) and the third female connecting element(s).

Example 2: The method of example 1, wherein the battery modules comprise a set of third male and a set of third female connecting elements, the sets of third male and female connecting elements being aligned respectively, as seen in the X-direction.

Example 3: The method of any of examples 1 and 2, wherein the battery modules each comprises a plurality of battery packs arranged side-by-side, as seen in the X-direction, and wherein at least every other of the battery packs in the battery modules comprises a third male or female connecting element, and wherein the third male or female connecting elements are aligned with each other, as seen in the X-direction

Example 4: The method of any of examples 1 to 3, wherein the method comprises a fourth guiding step to set the position of the first and second battery modules in a correct Y-position, wherein the chassis comprises male or female chassis guiding elements and the first and second battery modules comprises matching female or male guiding elements.

Example 5: The method of any of the preceding examples, wherein the rough guiding is provided by the first male connecting element being connected to an outermost side surface, extending in the Y-direction, of one of the battery modules and the matching first female connecting element being provided on an outermost side surface, extending in the Y-direction, of the other one of the battery modules.

Example 6: The method of example 5, wherein the first male and female connecting elements are arranged at a corner portion of the respective connecting sides.

Example 7: The method of any of the preceding examples, wherein the length of the first male connecting elements is greater than the length of the second and third male elements, as measured from the connecting side of the battery module.

Example 8: The method of any of the preceding examples, wherein a tip portion of the first male connecting elements has a smaller cross-section than a base portion of the first male connecting element.

Example 9: The method of example 8, wherein the first male connecting element has a tapered shape.

Example 10: The method of any of the preceding examples, wherein the first tolerance is greater than the second tolerance, as seen in the X-direction.

Example 11: The method of any of the preceding examples, wherein the first tolerance is greater than the third tolerance, as seen in the Z-direction.

Example 12: The method of any of the preceding examples, wherein the second female connecting element(s) comprises an oval or rectangular opening having a greatest extension in the Z-direction.

Example 13: The method of any of the preceding examples, wherein the third female connecting element(s) comprises an oval or rectangular opening having a greatest extension in the X-direction.

Example 14: The method of any of the preceding examples, wherein the second and the third finer guiding of the battery modules are carried out simultaneously.

Example 15: The method of any of the preceding examples, wherein the each one of the first and the second battery modules comprises a plurality of battery packs arranged side-by-side and wherein the battery packs are mechanically interconnected to adjacent battery pack(s).

Example 16: The method of any of the preceding examples, wherein the optical communication uses laser or infra-red light.

Example 17: The method of any of the preceding examples, wherein the method is for docking of a first and a second battery module of an energy storage arrangement to a respective side of a vehicle chassis with Automatic Guided Vehicle (AGV), comprising
a) providing the first battery module with a master AGV and the second battery module with a slave AGV on a respective side of the vehicle chassis;
b) synchronizing the speed of the master AGV with the speed of the chassis;
c) synchronizing the speed and the X-position, being the position as seen in the X-direction of the chassis, of the slave AGV to the speed of the master AGV;
d) guiding the AGV's inwardly towards the vehicle chassis in a Y-direction of the chassis to set the Y-positioning of the AGV's relative the vehicle chassis,
e) activating the mechanical guiding for guiding the AGV's inwardly towards the vehicle chassis in the Y-direction of the chassis to the predetermined end position.

Example 18: The method of any of examples 1 to 16, wherein the method is a manual method carried out by one or more operators.

The guiding of the AGV's inwardly towards the vehicle chassis in a Y-direction of the chassis to set the Y-positioning of the AGV's relative the vehicle chassis may be carried out by means of an operator of be means of automated guiding.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A method for docking of a first and a second battery module (2,3) of an energy storage arrangement (1) on a respective side of a vehicle chassis (50), the vehicle chassis (50) extending in a Y-direction, an X-direction and a Z-direction, the method comprising;
a) guiding the first and the second battery modules (2,3) inwardly towards the vehicle chassis (50) in a respective first and second lateral direction (Y1,Y2) to set the Y-positioning of the battery modules (2,3) relative the vehicle chassis (50),
b) activating a mechanical guiding for guiding the battery modules (2,3) inwardly towards the vehicle chassis (50) in the first and second lateral directions (Y1,Y2) direction to the predetermined end position including;
- a first rough guiding, wherein a first male connecting element (4) is provided on a connecting side (20,30) of one of the battery modules (2,3) and a matching first female connecting element (5) is provided on a connecting side (30,20) of the other one of the battery modules (3,2) and wherein the battery modules (2,3) are guided in the X- and Z-direction to a first relative position by connecting the first male connecting element (4) to the first female connecting element (5), the first male connecting element (4) and the first female connecting element (5) having a first tolerance, alternatively, the first rough guiding is provided by an optical communication between the first and second battery module (2,3) wherein the battery modules (2,3) are aligned and guided in the X- and Z-direction to the first relative position;
- a second finer guiding for setting a predetermined X-positions of the battery modules (2,3), wherein at least one second male connecting element (6) is provided on the connecting side (20,30) of one of the battery modules (2,3) and at least one matching second female connecting element (7) is provided on the connecting side (30,20) of the other one of the battery modules (3,2), the second male connecting element (6) and the second female connecting element (7) having a second tolerance and wherein the second tolerance is greater in the Z-direction compared to the X-direction; and
- a third finer guiding for setting a predetermined Z-position of the battery modules (2,3), wherein at least one third male connecting element (8) is provided on the connecting side (20,30) of one of the battery modules (2,3) and at least one matching third female connecting element (9) is provided on the connecting side (30,20) of the other battery module (3,2), and wherein the third male connecting element(s) (8) and the third female connecting element(s) (9) have a third tolerance and wherein the third tolerance between the third male and female connecting element(s) (8,9) is greater in the X-direction compared to the Z-direction and wherein the battery modules (2,3) are guided to the predetermined Z-position by aligning and connecting the third male connecting element(s) (8) and the third female connecting element(s) (9).

2. The method of claim 1, wherein the battery modules (2,3) comprise a set of third male (8) and a set of third female connecting elements (9), the sets of third male and female connecting elements (8,9) being aligned respectively, as seen in the X-direction.

3. The method of any of claims 1-2, wherein the battery modules (2,3) each comprises a plurality of battery packs (2a,2b,3c,2d,3a,3b,3c,3d) arranged side-by-side, as seen in the X-direction, and wherein at least every other of the battery packs (2a,2b,3c,2d,3a,3b,3c,3d) in the battery modules (2,3) comprises a third male or female connecting element (8,9), and wherein the third male or female connecting elements (8.9) are aligned with each other, as seen in the X-direction.

4. The method of any of the preceding claims, wherein the rough guiding is provided by the first male connecting element (4) being connected to an outermost side surface (11,12), extending in the Y-direction, of one of the battery modules (2,3) and the matching first female connecting element (5) being provided on an outermost side surface (11,12), extending in the Y-direction, of the other one of the battery modules (3.2).

5. The method of claim 4, wherein the first male and female connecting elements (4,5) are arranged at a corner portion of the respective connecting sides (11,12).

6. The method of any of the preceding claims, wherein a length (l₄) of the first male connecting element(s) (4) is greater than a length (l₆,l₈) of the second and third male elements (6,8), as measured from the connecting side (20,30) of the battery module (2,3).

7. The method of any of the preceding claims, wherein a tip portion (4b) of the first male connecting element(s) (4) has a smaller cross-section than a base portion (4c) of the first male connecting element (4c).

8. The method of any of the preceding claims, wherein the first tolerance is greater than the second tolerance, as measured in the X-direction.

9. The method of any of the preceding claims, wherein the first tolerance is greater than the third tolerance, as measured in the Z-direction.

10. The method of any of the preceding claims, wherein the second female connecting element(s) (7) comprises an oval or rectangular opening having a greatest extension in the Z-direction.

11. The method of any of the preceding claims, wherein the third female connecting element(s) (9) comprises an oval or rectangular opening having a greatest extension in the X-direction.

12. The method of any of the preceding claims, wherein the each one of the first and the second battery modules (2,3) comprises a plurality of battery packs (2a,2b,3c,2d,3a,3b,3c,3d) arranged side-by-side and wherein the battery packs (2a,2b,3c,2d,3a,3b,3c,3d) are mechanically interconnected to adjacent battery pack(s).

13. The method of any of the preceding claims, wherein the optical communication uses laser or infra-red light.

14. The method of any of the preceding claims, wherein the method is for docking of a first and a second battery module (2,3) of an energy storage arrangement (1) to a respective side of a vehicle chassis (50) with Automatic Guided Vehicle (AGV) (110,111), comprising
a) providing the first battery module (2) with a master AGV (110) and the second battery module (3) with a slave AGV (111) on a respective side of the vehicle chassis (50);
b) synchronizing a speed (S_{mAGV}) of the master AGV with a speed (S_{c}) of the chassis (50);
c) synchronizing a speed (S_{sAGV}) and the X-position, being the position as seen in the X-direction of the chassis (50), of the slave AGV (111) to the speed (S_{mAGV}) of the master AGV (110);
d) guiding the AGV's (110,111) inwardly towards the vehicle chassis (50) in a Y-direction of the chassis (50) to set the Y-positioning of the AGV's (110,111) relative the vehicle chassis (50),
e) activating the mechanical guiding for guiding of the first and the second battery modules (2,3) inwardly towards the vehicle chassis (50) in the Y-direction of the chassis (50) to the predetermined end position.

15. The method of any of claims 1 to 13, wherein the method is a manual method carried out by one or more operators.
